# EUROPEAN PATENT APPLICATION

(11) **EP 4 770 119 A1**
(43) Date of publication of application: **01.07.2026**
(21) Application number: 23950365.9
(22) Date of filing: 21.09.2023
(51) Int. Cl.: H04R 1/10

(54) **EARPHONE WITH DETACHABLE BATTERY**

(30) Priority: 25.08.2023 CN 202322310918 U
(71) Applicant: Shenzhen Yinshijie Technology Co., Ltd., Shenzhen, Guangdong 518000 (CN)
(72) Inventor: LIU, Qihui, Ganzhou, Jiangxi 342500 (CN)
(74) Representative: Murgitroyd & Company
(86) International application number: PCT/CN2023/120241
(87) International publication number: WO 2025/043791

(57) **Abstract**

An earphone with a detachable battery, comprising an earphone assembly and a battery assembly, wherein the earphone assembly is detachably connected to the battery assembly by means of magnetic attraction conductive assemblies; each magnetic attraction conductive assembly comprises an earphone end and a battery end, and each of both comprises a fixing plastic member, a magnet and conductive metal members; the fixing plastic members cover the magnets; the conductive metal members are arranged in the fixing plastic members and are exposed on a contact surface of the earphone end and the battery end, and every two conductive metal members are connected when the earphone end is in contact with the battery end; and one conductive metal member of the battery end or the earphone end is of a contact type, and the other conductive metal member is of a flat contact type, and the two conductive metal members can also be stably connected when rotating relatively.

## Description

The present application claims priority to the Chinese Patent Application No. 202322310918.3, filed with the China National Intellectual Property Administration (CNIPA) on August 25, 2023, and entitled "BATTERY-REMOVABLE HEADSET", which is incorporated herein by reference in its entirety.

### TECHNICAL FIELD

The present disclosure relates to the technical field of headsets, and in particular to a battery-removable headset.

### BACKGROUND

Existing battery-removable headsets generally adopt a spring point-contact-type structure. Due to their relatively complex configurations, they are prone to spring failure, poor sealing performance, and the like, resulting in low stability and poor durability.

### SUMMARY

An objective of the present disclosure is to provide a battery-removable headset. In use, the battery can be removed and replaced with a new one to supply power, while the removed battery is charged, thereby ensuring normal use of the Bluetooth headset, and enhancing practicability of the Bluetooth headset. This solves the background-art problem that most existing Bluetooth headsets are directly charged, and their batteries are non-removable and can only be recharged via an external charging device, thereby compromising the practicality. The battery-removable headset has a simple structure, is easier to seal, and features better stability.

A battery-removable headset includes a headset assembly and a battery assembly, where the headset assembly is removably connected to the battery assembly through a magnetically conductive assembly;
the magnetically conductive assembly includes a headset-side magnetically conductive assembly and a battery-side magnetically conductive assembly;
the headset-side magnetically conductive assembly and the battery-side magnetically conductive assembly each include a fixed plastic member, a magnet, and a conductive metal member;
the fixed plastic members are respectively wrapped around the magnet;
the conductive metal members are respectively disposed in the fixed plastic members, and respectively exposed on contact surfaces of the headset-side magnetically conductive assembly and the battery-side magnetically conductive assembly; and the two conductive metal members are electrically connected when the headset-side magnetically conductive assembly comes into contact with the battery-side magnetically conductive assembly; and
one of the conductive metal member of the battery-side magnetically conductive assembly and the conductive metal member of the headset-side magnetically conductive assembly is a point-contact-type conductive metal member, while the other is a planar-contact-type conductive metal member; and the two conductive metal members can also be stably electrically connected when rotated relative to each other.

As a further solution to the present disclosure, the headset-side magnetically conductive assembly and the battery-side magnetically conductive assembly of the magnetically conductive assembly each further include a fixed plastic sheet; and the fixed plastic sheets are respectively configured to fix the conductive metal members, and respectively specifically fix portions of the conductive metal members respectively electrically connected with the headset assembly and the battery assembly.

As a further solution to the present disclosure, the point-contact-type conductive metal member is a V-shaped reed, with a tail end provided with a support foot;
a plurality of protrusions are provided on the fixed plastic member; and the plurality of protrusions are configured to fix the point-contact-type conductive metal member through the fixed plastic sheet and the support foot; and
a V-shaped portion of the point-contact-type conductive metal member is exposed on two opposing surfaces of two magnetically conductive assemblies through a hole in the fixed plastic member.

As a further solution to the present disclosure, the planar-contact-type conductive metal member is a T-shaped component; the planar-contact-type conductive metal member is embedded into the fixed plastic member; and a larger end of the planar-contact-type conductive metal member, specifically a head of the T-shaped component, is exposed on the fixed plastic member, and configured to contact the conductive metal member on the other magnetically conductive assembly; and
a smaller end of the planar-contact-type conductive metal member, specifically a foot of the T-shaped component, cooperates with the fixed plastic sheet, with a tail end protruding from the fixed plastic sheet, and configured to conduct with a battery.

As a further solution to the present disclosure, the headset assembly is in-ear, semi-in-ear, or ear-mounted.

As a further solution to the present disclosure, the battery assembly further includes a housing; a battery is disposed in the housing; and the battery-side magnetically conductive assembly cooperates with an opening of the housing, such that the battery is sealed in the housing.

Compared with the prior art, the present disclosure has the following beneficial effects: Two different conductive metal members, i.e., the point-contact-type conductive metal member and the planar-contact-type conductive metal member, are used. Compared with the conventional connection method using two point-contact-type conductive metal members, the present disclosure does not require strict angle control, and can realize conduction at any position within a certain range, offering greater convenience in use. Due to the simple structure, the present disclosure is sealed more easily to achieve better stability.

### BRIEF DESCRIPTION OF THE DRAWINGS

FIG. 1 is an exploded view of a headset;
FIG. 2 is a first schematic structural view of a magnetically conductive assembly; and
FIG. 3 is a second schematic structural view of a magnetically conductive assembly.

### DETAILED DESCRIPTION OF THE EMBODIMENTS

The technical solutions in embodiments of the present disclosure will be described below clearly and completely with reference to the accompanying drawings in the embodiments of the present disclosure. Apparently, the described embodiments are merely some, rather than all of the embodiments of the present disclosure. All other embodiments obtained by a person of ordinary skill in the art based on embodiments of the present disclosure without creative efforts shall fall within the protection scope of the present disclosure.

In the description of the present disclosure, it should be understood that orientations or position relationships indicated by terms "upper", "lower", "front", "rear", "left", "right", "top", "bottom", "inside", "outside", "one end", "one side", and the like are orientation or position relationships as shown in the drawings, and these terms are just used to facilitate description of the present disclosure and simplify the description, but not to indicate or imply that the mentioned device or element must have a specific orientation and must be established and operated in a specific orientation, and thus, these terms cannot be understood as a limitation to the present disclosure.

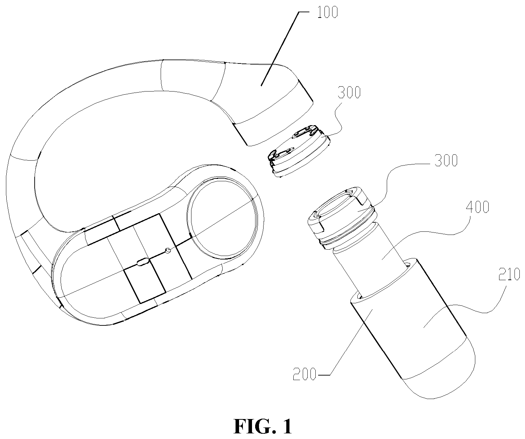

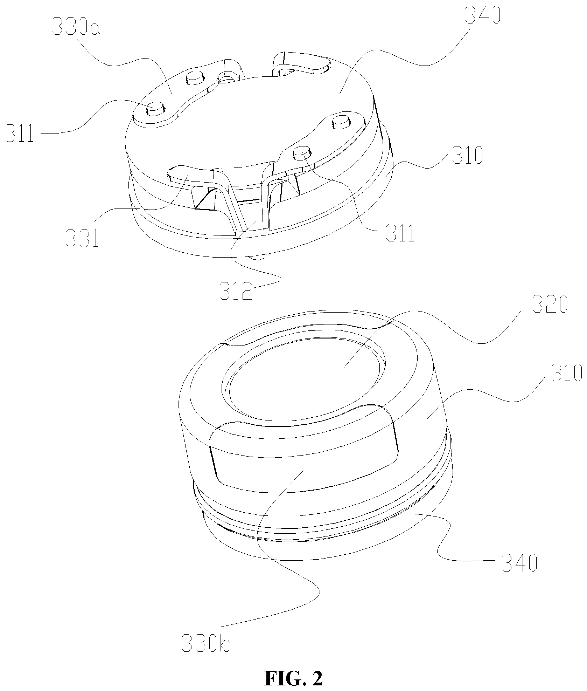

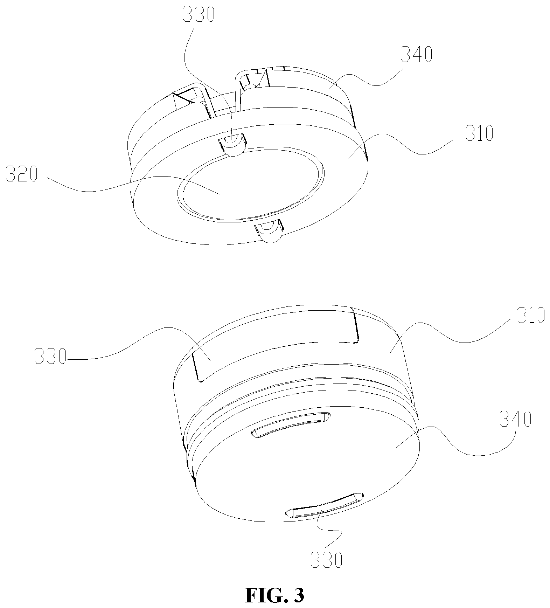

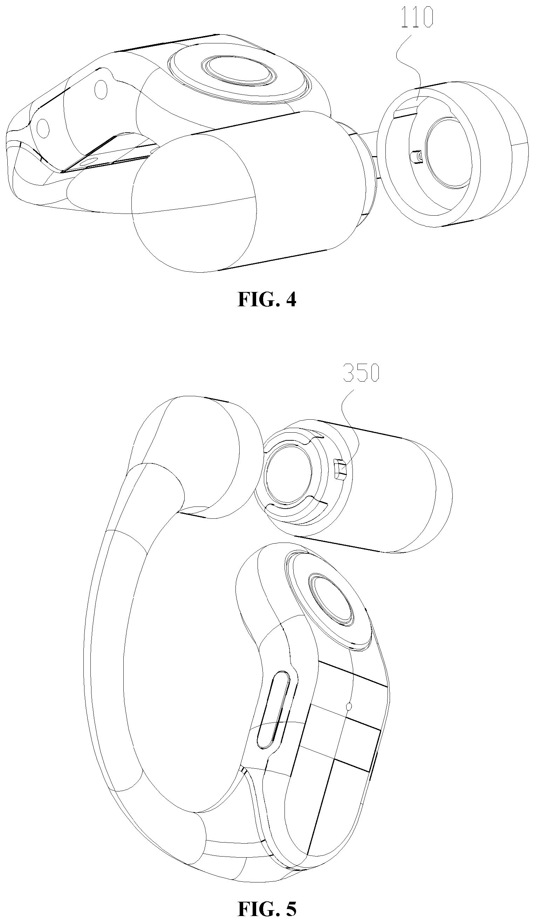

As shown in FIGS. 1-3, a battery-removable headset includes a headset assembly 100 and a battery assembly 200. The headset assembly 100 is removably connected to the battery assembly 200 through a magnetically conductive assembly 300. The magnetically conductive assembly 300 includes a headset-side magnetically conductive assembly and a battery-side magnetically conductive assembly. The headset-side magnetically conductive assembly and the battery-side magnetically conductive assembly each include a fixed plastic member 310, a magnet 320, and a conductive metal member 330. The fixed plastic members 310 are respectively wrapped around the magnets 320.

The conductive metal members 330 are respectively disposed in the fixed plastic members 310, and respectively exposed on contact surfaces of the headset-side magnetically conductive assembly and the battery-side magnetically conductive assembly. The two conductive metal members 330 are electrically connected when the headset-side magnetically conductive assembly comes into contact with the battery-side magnetically conductive assembly.

One of the conductive metal member of the battery-side magnetically conductive assembly and the conductive metal member of the headset-side magnetically conductive assembly is a point-contact-type conductive metal member 330a, while the other is a planar-contact-type conductive metal member 330b. The two conductive metal members 330 can also be stably electrically connected when rotated relative to each other.

Two different conductive metal members, i.e., the point-contact-type conductive metal member and the planar-contact-type conductive metal member, are used. Compared with the conventional connection method using two point-contact-type conductive metal members, the present disclosure does not require strict angle control, and can realize conduction at any position within a certain range, offering greater convenience in use. Due to the simple structure, the present disclosure is sealed more easily to achieve better stability.

Further, the headset-side magnetically conductive assembly and the battery-side magnetically conductive assembly of the magnetically conductive assembly 300 each further include a fixed plastic sheet 340. The fixed plastic sheets 340 are respectively configured to fix the conductive metal members 330, and specifically fix portions of the conductive metal members 330 respectively electrically connected with the headset assembly 100 and the battery assembly 200.

Further, the point-contact-type conductive metal member 330a is a V-shaped reed, with a tail end provided with a support foot 331.

A plurality of protrusions 311 are disposed on the fixed plastic member 310. The plurality of protrusions 311 are configured to fix the conductive metal member 330 through the fixed plastic sheet 340 and the support foot 331.

A V-shaped portion of the conductive metal member 330 is exposed on opposing surfaces of two magnetically conductive assemblies 300 through a hole 312 in the fixed plastic member 310.

Further, the planar-contact-type conductive metal member 330b is a T-shaped component. The conductive metal member is embedded into the fixed plastic member 310. A larger end of the conductive metal member 330, i.e., a head of the T-shaped component, is exposed on the fixed plastic member 310, and configured to contact the conductive metal member 330 on the other magnetically conductive assembly 300, i.e., the point-contact-type conductive metal member 330a.

A smaller end of the conductive metal member 330, i.e., a foot of the T-shaped component, cooperates with the fixed plastic sheet 340, with a tail end protruding from the fixed plastic sheet 340, and configured to conduct with a battery 400.

Further, the headset assembly 100 is in-ear, semi-in-ear, or ear-mounted.

Further, the battery assembly 200 further includes a housing 210. A battery 400 is disposed in the housing 210. The battery-side magnetically conductive assembly 300 cooperates with an opening of the housing 210, such that the battery 400 is sealed in the housing 210.

Further, the magnetically conductive assembly 300 of the battery assembly 200 is provided with a limiting protrusion 350. Correspondingly, a contact portion of the headset assembly 100 with the battery assembly 200 is provided with a limiting groove 110. The limiting protrusion 350 cooperates with the limiting groove 110. The limiting groove 110 is wider than the limiting protrusion 350, such that the battery assembly 200 can rotate within a certain range after being combined with the headset assembly 100, and the planar-contact-type conductive metal member 330b can always contact the point-contact-type conductive metal member 330a. This further provides an error-proofing function.

The above merely describes specific implementations of the present disclosure, but the protection scope of the present disclosure is not limited thereto. A person skilled in the art can easily conceive modifications or replacements according to the technical solutions and ideas of the present disclosure within the technical scope of the present disclosure, and these modifications or replacements shall fall within the protection scope of the present disclosure.

## Claims

1. A battery-removable headset, comprising: a headset assembly (100) and a battery assembly (200), wherein the headset assembly (100) is removably connected to the battery assembly (200) through a magnetically conductive assembly (300);
the magnetically conductive assembly (300) comprises a headset-side magnetically conductive assembly and a battery-side magnetically conductive assembly;
the headset-side magnetically conductive assembly and the battery-side magnetically conductive assembly each comprise a fixed plastic member (310), a magnet (320), and a conductive metal member (330);
the fixed plastic members (310) are respectively wrapped around the magnets (320);
the two conductive metal members (330) are respectively disposed in the fixed plastic members (310), and respectively exposed on contact surfaces of the headset-side magnetically conductive assembly and the battery-side magnetically conductive assembly; and the two conductive metal members (330) are electrically connected when the headset-side magnetically conductive assembly comes into contact with the battery-side magnetically conductive assembly; and
one of the conductive metal member (330) of the battery-side magnetically conductive assembly and the conductive metal member of the headset-side magnetically conductive assembly is a point-contact-type conductive metal member, while the other is a planar-contact-type conductive metal member; and the two conductive metal members are also stably electrically connected when rotated relative to each other.

2. The battery-removable headset according to claim 1, wherein the headset-side magnetically conductive assembly and the battery-side magnetically conductive assembly of the magnetically conductive assembly (300) each further comprise a fixed plastic sheet (310); and the fixed plastic sheets (310) are respectively configured to fix the conductive metal members (330), and respectively fix portions of the conductive metal members (330) respectively electrically connected with the headset assembly (100) and the battery assembly (200).

3. The battery-removable headset according to claim 1 or 2, wherein the point-contact-type conductive metal member (330) is a V-shaped reed, with a tail end provided with a support foot (331);
a plurality of protrusions (311) are provided on the fixed plastic member (310); and the plurality of protrusions (311) are configured to fix the point-contact-type conductive metal member (330) through the fixed plastic sheet (310) and the support foot (331); and
a V-shaped portion of the point-contact-type conductive metal member (330) is exposed on two opposing surfaces of two magnetically conductive assemblies (300) through a hole in the fixed plastic member (310).

4. The battery-removable headset according to claim 1 or 2, wherein the planar-contact-type conductive metal member (330) is a T-shaped component; the planar-contact-type conductive metal member (330) is embedded into the fixed plastic member (310); and a larger end of the planar-contact-type conductive metal member (330), namely a head of the T-shaped component, is exposed on the fixed plastic member (310), and is configured to contact the conductive metal member (330) on the other magnetically conductive assembly (300); and
a smaller end of the planar-contact-type conductive metal member (330), namely a foot of the T-shaped component, cooperates with the fixed plastic sheet (310), with a tail end protruding from the fixed plastic sheet (310) and configured to conduct with a battery (400).

5. The battery-removable headset according to claim 1, wherein the headset assembly (100) is in-ear, semi-in-ear, or ear-mounted.

6. The battery-removable headset according to claim 1, wherein the battery assembly (200) further comprises a housing (210); a battery (400) is disposed in the housing (210); and the battery-side magnetically conductive assembly (300) cooperates with an opening of the housing (210), such that the battery is sealed in the housing (210).

7. The battery-removable headset according to claim 1, wherein the magnetically conductive assembly (300) of the battery assembly (200) is provided with a limiting protrusion (350); a contact portion of the headset assembly (100) with the battery assembly (200) is provided with a limiting groove (110); and the limiting protrusion (350) cooperates with the limiting groove (110).

8. The battery-removable headset according to claim 1, wherein the limiting groove (110) is wider than the limiting protrusion (350).
